# EUROPEAN PATENT SPECIFICATION

(11) **EP 1 854 577 B1**
(45) Date of publication and mention of the grant of the patent: **29.06.2016**
(21) Application number: 06405207.9
(22) Date of filing: 12.05.2006
(51) Int. Cl.: B23K 26/38, B23Q 1/01, B23K 101/04

(54) **Method of manufacturing column and bed of machine tool and structure thereof**
Verfahren zur Herstellung eines Werkzeugmachinenbetts und einer Werkzeugmachinentraverse und zugehörige Struktur
Méthode de fabrication d'une colonne et d'un banc pour une machine d'usinage et structure associé

(43) Date of publication of application: 14.11.2007
(73) Proprietor: Yamazaki Mazak Corporation, Niwa-gun, Aichi (JP)
(72) Inventor: Yamazaki, Tsunehiko, Niwa-gun Aichi pref. (JP); Miyakawa, Naoomi, Niwa-gun Aichi pref. (JP)
(74) Representative: TBK

(56) References cited:
- EP-A- 1 600 242
- WO-A-2004/067872
- DE-A1- 4 415 305
- GB-A- 2 394 691
- JP-A- H11 311 220

## Description

### BACKGROUND OF THE INVENTION

### Field of the Invention

The present invention relates to a bed of a machine tool and a structure thereof.

### Description of the Related Art

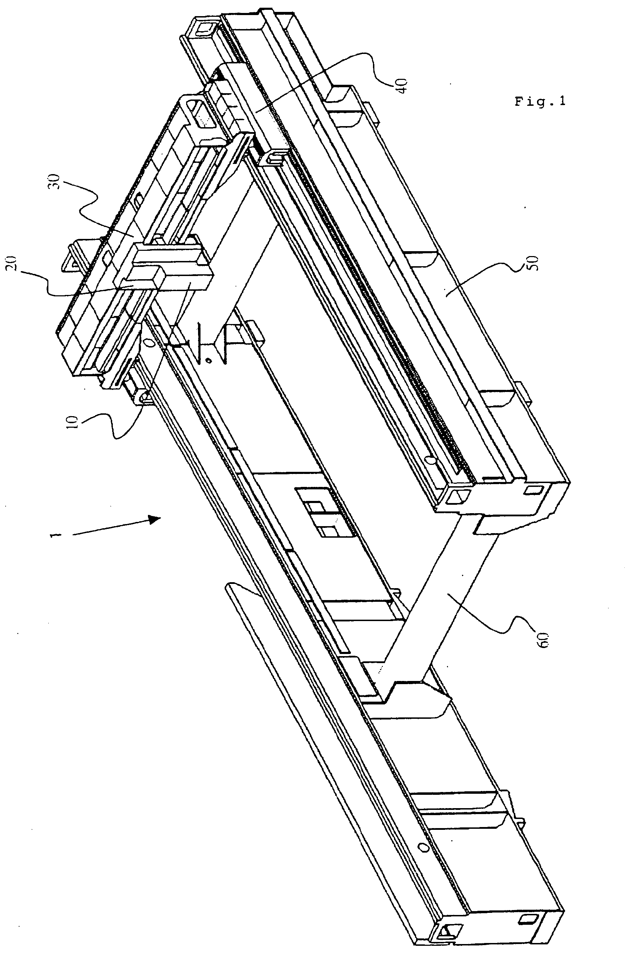

FIG. 1 is an explanatory view showing a basic structure of a machine tool.

A machine tool indicated generally by reference numeral 1 has a saddle 20 supporting a machining head 10 capable of vertical movement, and the saddle 20 is supported by a column 30 capable of horizontal movement.

The column 30 has a motor 40 and moves on a bed 50 in the longitudinal direction. The bed 50 has a construction that a pair of structures are connected to each other by a beam 60.

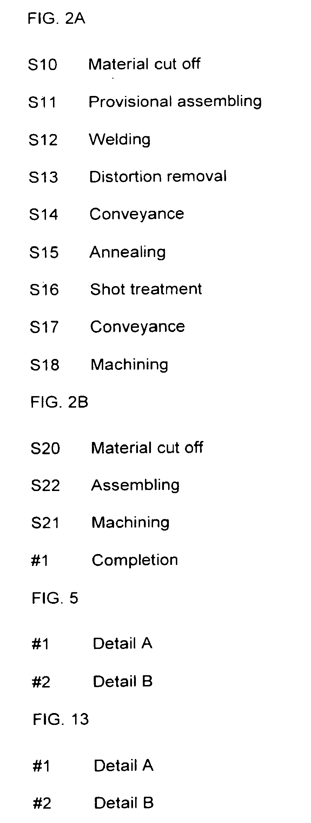

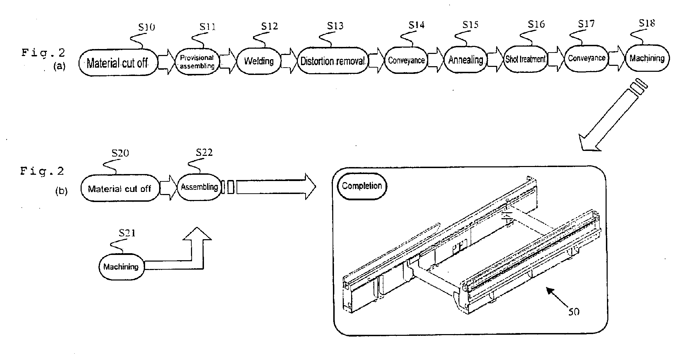

FIG. 2A shows a conventional manufacturing process of can manufacturing constituting the bed 50 of the machine tool.

A material is cut off in step S10. When plasma fusing is used as means for cutting, for example, a dimensional tolerance is approximately ±1 mm to the fusing of 1000 mm.

The cut off material is provisionally assembled in step S11 and welded in step S12. In step S13, distortion generated by welding is removed. For example, in a lengthy structure with the whole length of approximately 8 m, distortion of not less than 10 mm is normally generated. Moreover, the distortion removal is a work requiring a long time labor by a worker with an extremely advanced skill. This structure is conveyed to annealing equipment in step S14 and annealed in step S15. A shot treatment is applied to the annealed structure, which is conveyed to machining equipment in step S17, given machining in step S18 and completed into the bed 50. This machining has a maximum machining range of not more than 4 m even in a relatively generally-used large-sized machine, and a place for machining is extremely limited for a large-sized work piece exceeding this size.

Construction of a machine tool in a welding can manufacturing structure is disclosed in non-patent documents of "Design Principle of Machine Tool" (1971) written by F. Koenigsberger, translated by Susumu Shiozaki and published by Yokendo and a magazine, "Applied Mechanical Engineering," Special Feature: Welded Structure Design, issued on March 1, 1970, Vol. 11, No. 3.

Document GB 2 394 691 discloses a machine tool frame structure comprising two spaced end wall parts and two spaced, rectilinearly-elongate members bridging the space between the end wall parts. The elongate members are channel-form and comprise parallel, bent sheet metal members of substantially identical dimensions and cross-sectional form, which are rigid with the first and second end wall parts. The elongate sheet metal members are assembled with bolts and nuts 89 and by means of spot welding. These elongate members are suitable as trackways for a tool-carrying carriage of a machine tool, such as a lathe or router.

Document DE 44 15 305 refers to a method for the production of a machine tool in which load-bearing elements and/or elements forming an outer cover of the machine tool are prefabricated and subsequently welded together during an assembly operation. Tenons and mortices are used to join the sheet metal members constituting the structure of the machine tool. Stiffeners can be added if the stiffness of the sheet metal members is itself not sufficient for the needs of the machine tool. During prefabrication at least some of the elements are cut out with the use of a laser cutting process.

Document WO 2004/067872 discloses a framework structure made of two-dimensional or three-dimensional support structure for a machine tool, especially a laser-based machining device: It comprises several planar parts, such as ribs or plates, which can be inserted into each other as plug-in elements by means of recesses so as to form some type of grid structure. Preferably three parts are inserted into each other at least at one point of the support structure in order to form a lock.

Document EP 1 600 242 refers to an invention providing a reflector-mirror drive shaft controller for laser beam machine which optimizes a beam for workpiece thickness by correcting a control axis of a laser reflector-mirror of a laser beam machine. Such a machine comprises, as basic means, a bed, a pallet which is disposed on the bed and holds a workpiece, and a column which moves along a longitudinal axis of the bed. A machining head, which is supported by saddle mounted on the column, has an optical system which admits a laser beam from a laser oscillator.

Since a bed or the like of a machine tool is a large-sized structure, conveyance requires labor, and equipment such as a large-sized annealing furnace is needed.

Also, equipment for machining needs a large-sized machine and the number of processes becomes huge. Production time takes a couple of months or more using a conventional process.

An object of the present invention is to provide a method of manufacturing a structural body such as a column and a bed of a machine tool solving the above problems and a structure produced by this manufacturing method.

### SUMMARY OF THE INVENTION

A bed of the machine tool having the assembly structure of the sheet metal member made by the laser precision machining is provided with an upper unit and a lower unit of the bed, and the lower unit of the bed is provided with side plates extending in the longitudinal direction of the bed and oppositely arranged, a bottom plate covering a bottom portion of the side plates, a rectangular column member arranged on an upper part of the side plates, end face plates covering both ends of the side plates, a plurality of ribs arranged inside and joined to the side plates and a fastening unit for fastening both the side plates.

According to the present invention, a bed of a machine tool, which is a large-sized structure, can be constructed easily by assembling sheet metal material.

Manufacture of the bed with this assembly structure of the sheet metal members is completed by achieving high accuracy of laser machining.

According to the present invention, such a large-sized structure can be manufactured in 3 to 4 days.

### BRIEF DESCRIPTION OF THE DRAWINGS

FIG. 1 is an explanatory view showing a basic structure of a machine tool;
FIG. 2 is a diagram showing a manufacturing process of a bed of the machine tool;
FIG. 3 is an assembled view of a column of the present invention;
FIG. 4 is an assembled view of a body of the column of the present invention;
FIG. 5 is an exploded view of the body of the column of the present invention;
FIG. 6 is a detailed view of A part of FIG. 5;
FIG. 7 is a detailed view of B part of FIG. 5;
FIG. 8 is an assembled view of a column foot member;
FIG. 9 is an exploded view of the column foot member;
FIG. 10 is an assembled view of a bed of the present invention;
FIG. 11 is an explanatory view of an upper member and a lower member of the bed of the present invention;
FIG. 12 is an assembled view of a bed lower unit;
FIG. 13 is an exploded view of the bed lower unit;
FIG. 14 is a detailed view of A part of FIG. 13;
FIG. 15 is a detailed view of B part of FIG. 13;
FIG. 16 is a list view of laser machining members of the bed lower unit; and
FIG. 17 is a sectional view of the bed lower unit.

### DETAILED DESCRIPTION OF THE PREFERRED EMBODIMENTS

FIG. 2B is an explanatory diagram showing a manufacturing process of a bed.

In step S20, a sheet metal material is cut off to make a required member. Laser precision machining is used as cutting means. The laser precision machining has a dimensional tolerance with a high accuracy of ±0.05 mm with respect to a cut length of 1000 mm. In parallel with this material cutting process, in step S21, a machined member to be assembled to the bed is machined.

In step S22, the bed 50 is completed by assembling a sheet metal member and assembling the machined member.

As mentioned above, according to the present invention, since the laser precision machining can be used, the sheet metal member is machined with a high accuracy including a tenon and a mortice, and by assembling these members, a structure such as a column or a bed can be manufactured easily. Since a fastening member such as a bolt/nut is used for fastening of members, large-scale welding or annealing is not needed. Then, welding distortion or the like is not generated but a structure with a high accuracy can be obtained.

Moreover, since machining can be performed in parallel with laser precision machining, productivity is high and required structures can be manufactured in a short period of time.

A structure and a manufacturing method of a column and a bed according to the present invention will be described below.

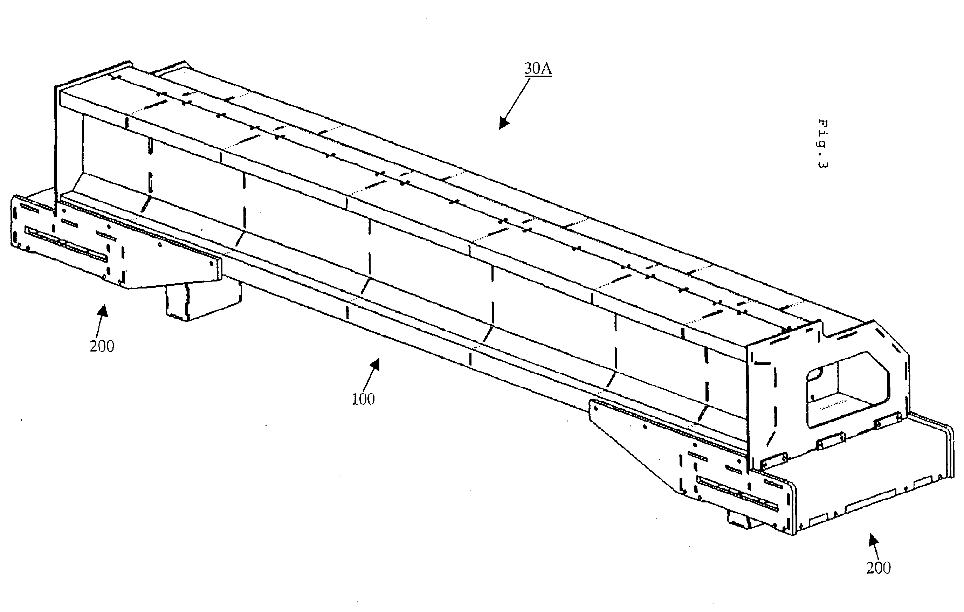

FIG. 3 is a perspective view showing an entire construction of a column made by the manufacturing method of the present invention.

A column unit generally referred to as reference character 30A is provided with a column body 100 and column foot members 200 mounted at both side ends of the column body 100.

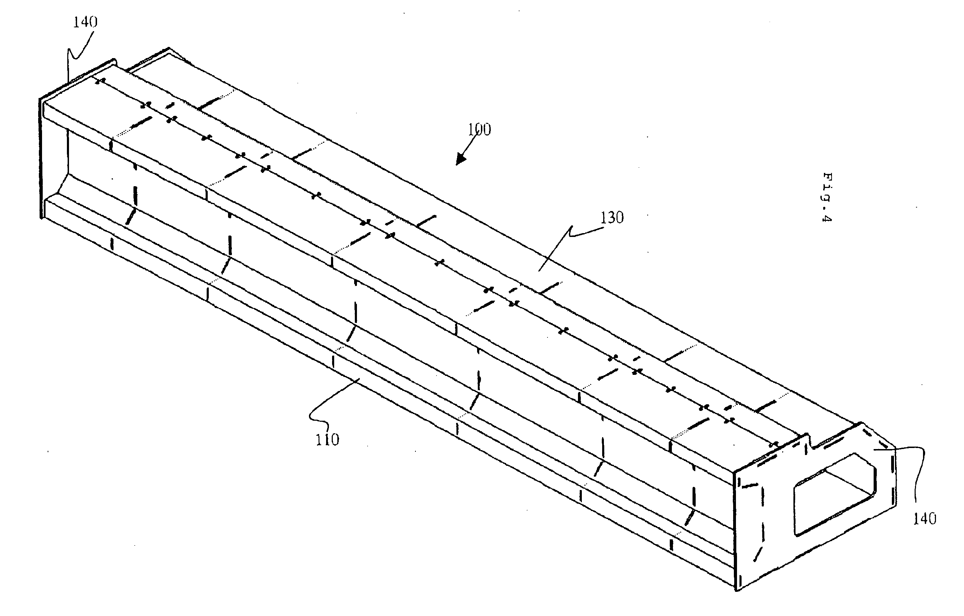

FIG. 4 is a perspective view of the column body 100, and the column body 100 has a front member 110, a rear member 130 and side covers 140 mounted on both side ends.

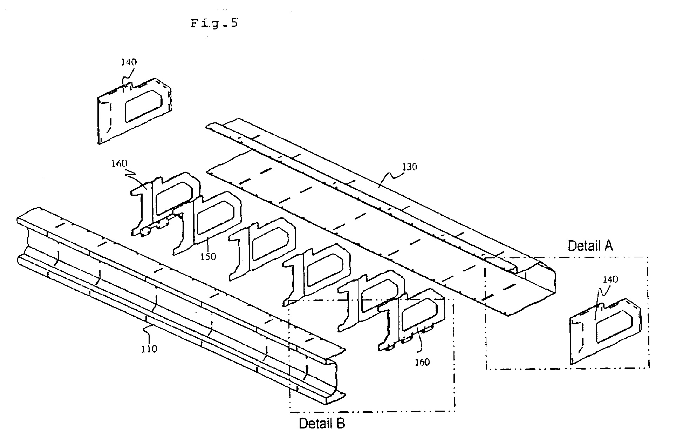

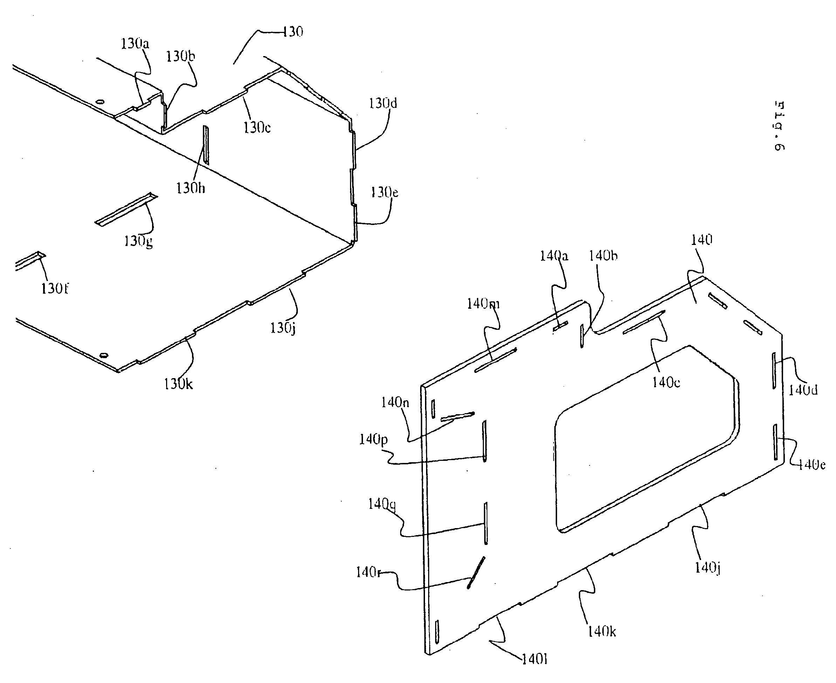

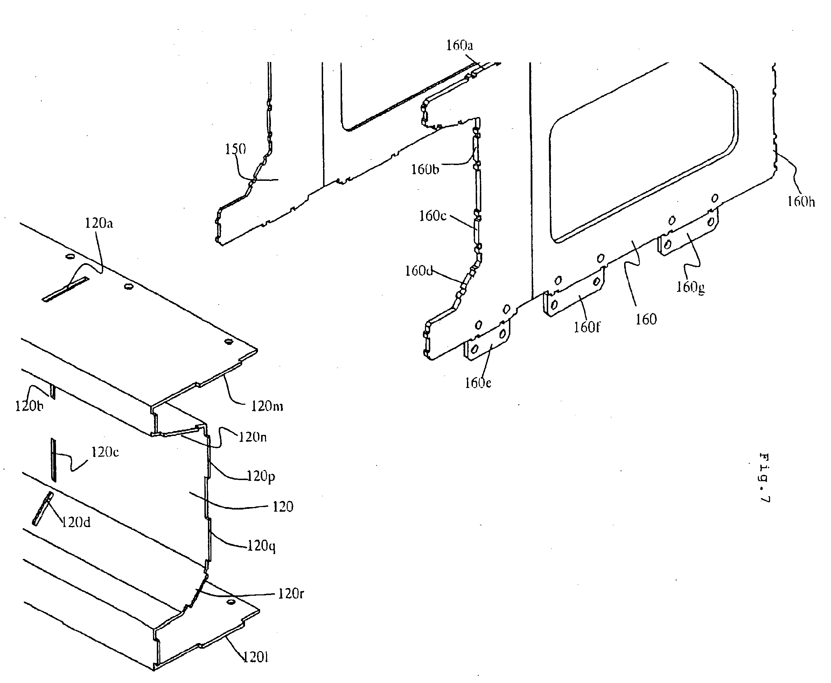

FIG. 5 is an exploded view of the column body, FIG. 6 is a detailed view of A part in FIG. 5, and FIG. 7 is a detailed view of B part in FIG. 5.

The column body has the front member 110 obtained by folding machining of a plate member and applying a required machining such as a slit and the rear member 130 given the same machining, and two types of ribs 150, 160 are arranged inside a closed sectional space formed by the front member 110 and the rear member 130. And both side ends of the column body are covered by the side covers 140.

FIG. 6 is an explanatory view showing an engagement structure between the column body rear member 130 and the side cover 140, and FIG. 7 is an explanatory view showing an engagement structure between the column body front member 120, the rib 160 and the side cover 140.

On an end of the rear member 130, a plurality of projection portions 130a, 130b, 130c, 130d, 130e, 130j, 130k and so on to be tenons are provided.

On the other hand, on the side cover 140, a plurality of slits 140a, 140b, 140c, 140d, 140e, 140m, 140n, 140p, 140q, 140r and so on to be mortices and recess portions 140j, 140k, 140l are formed.

The projection portion 130a of the rear member 130 is inserted into the slit 140a of the side cover 140 and fixed. Similarly, each of the projection portions 130b, 130c, 130d, 130e of the rear member 130 is inserted into the slits 140b, 140c, 140d, 140e of the side cover 140 and fixed. Moreover, the projection portions 130j, 130k of the rear member 130 are engaged with the recess portions 140j, 140k of the side cover 140.

The rear member 130 has slits 130f, 130g, 130h into which a projection portion of the rib 160 is inserted, which will be described referring to FIG. 7.

In FIG. 7, the front member 120 has a plurality of projection portions 120m, 120n, 120p, 120q, 120r, 1201 on the end, while slits 120a, 120b, 120c, 120d and so on are formed on a face plate portion.

The projection portions 120m, 120n, 120p, 120q, 120r on the end are inserted and fixed to the corresponding slits 140m, 140n, 140p, 140q, 140r on the side cover 140 as described referring to FIG. 6.

The rib 160 is provided with a plurality of projection portions 160a, 160b, 160c, 160d, 160e, 160f, 160g, 160h on its outer edge portion.

The projection portions 160a, 160b, 160c, 160d of the rib 160 are inserted and fixed to the corresponding slits 120a, 120b, 120c, 120d of the front member 120, respectively.

The projection portion 160e on the bottom portion of the rib 160 is inserted into a slit, not shown, formed on the bottom portion of the front member 120 and fixed.

Similarly, the projection portions 160f, 160g, 160h of the rib 160 are inserted and fixed to the corresponding slits 130f, 130g, 130h of the rear member 130.

The column body is assembled by the above-mentioned fastening structure.

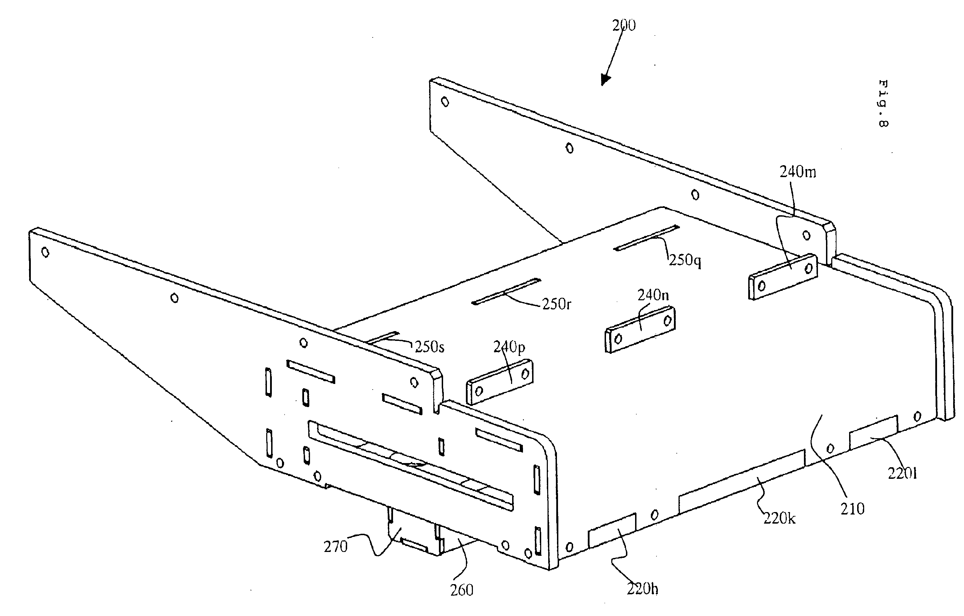

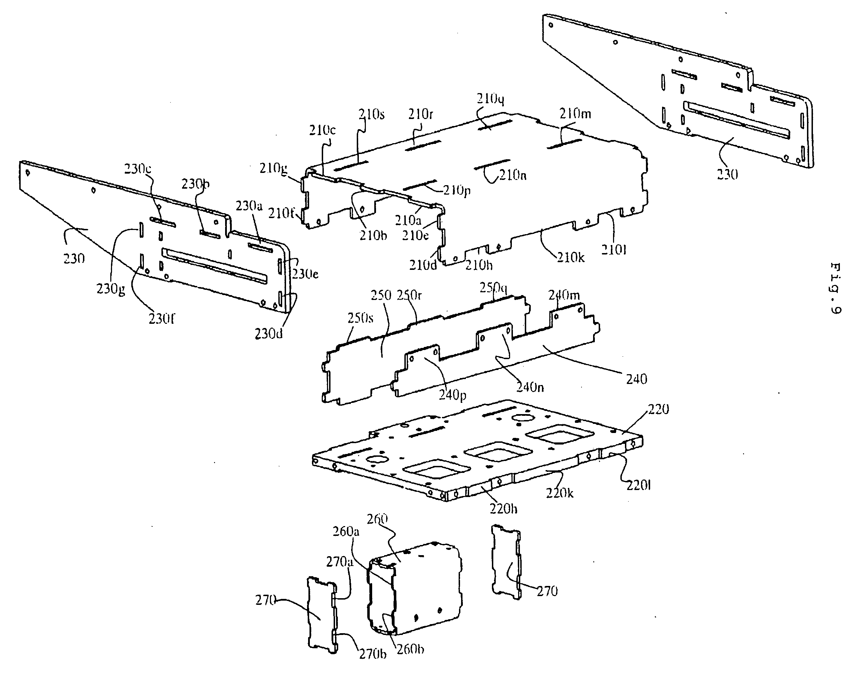

FIG. 8 is a perspective view of the column foot member 200, and FIG. 9 is an exploded view of the column foot member.

The column foot member generally referred to as reference numeral 200 has a foot body 210, a bottom plate 220, a body cover 230, two types of ribs 240, 250, a stopper 260 and a stopper cover 270.

As shown in FIG. 9, each member constituting the column foot member is made by precision laser machining of a sheet metal and by folding required portions.

The foot body 210 has projection portions 210a, 210b, 210c, 210d, 210e, 210f, 210g on both sides and has recess portions 210h, 210k, 2101 at a bent lower end.

Moreover, on the upper surface, slits 210m, 210n, 210p, 210q, 210r, 210s are formed.

The bottom plate 220 has projection portions 220h, 220k, 220l to be engaged with corresponding recess portions 210h, 210k, 2101 of the body 210.

The body cover 230 has a plurality of slits 230a, 230b, 230c, 230d, 230e, 230f, 230g and so on formed. The projection portions 210a, 210b, 210c, 210d, 210e, 210f, 210g of the foot body 210 are inserted into the corresponding slits 230a, 230b, 230c, 230d, 230e, 230f, 230g of the body cover 230, respectively.

The rib 240 has projection portions 240m, 240n, 240p on an upper part, and each of the projection portions is inserted into the corresponding slits 210m, 210n, 210p of the foot body 210. The projection portions 240m, 240n, 240p pierce the upper surface of the foot body 210 and project upward.

The rib 250 has projection portions 250q, 250r, 250s on an upper part, which are inserted into the corresponding slits 210q, 210r, 210s of the foot body 210.

The stopper 260 is folded in a rectangular column shape, and a plurality of projection portions 260a, 260b and so on are provided at an end. The stopper cover 270 has corresponding recess portions 270a, 270b and so on, and the stopper covers 270 are engaged with both sides of the stopper 260.

The column of the present invention has the above-described construction, and the entire unit is assembled by preparing sheet metal members made by precision laser machining and inserting projection portions provided at required locations into the slits.

The constituent members are all sheet metal members, and machining can be automated and required units can be produced in a short time.

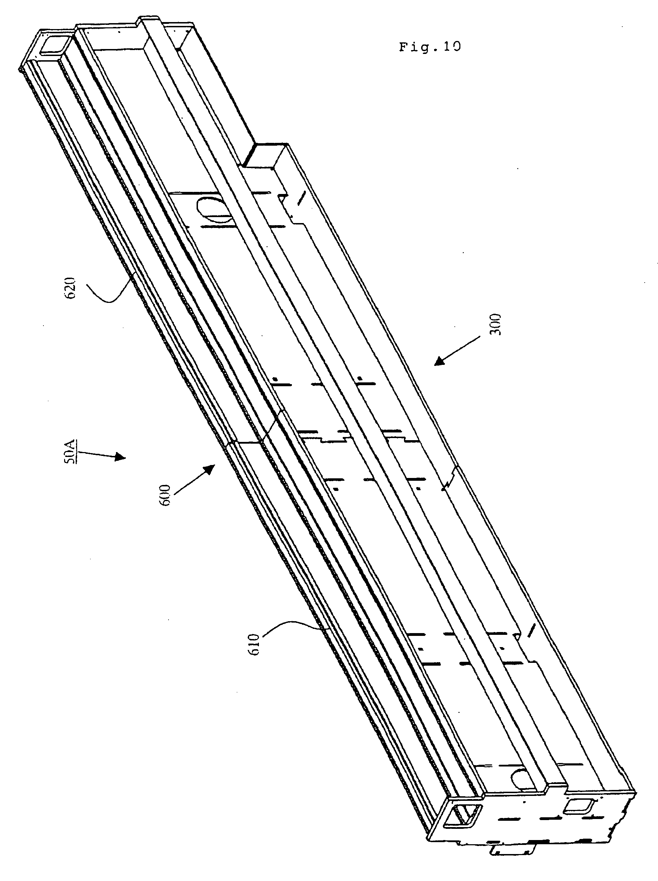

FIG. 10 is a perspective view of a bed unit.

The bed unit generally referred to as reference character 50A is constituted by a bed lower portion 300 and a bed upper portion 600.

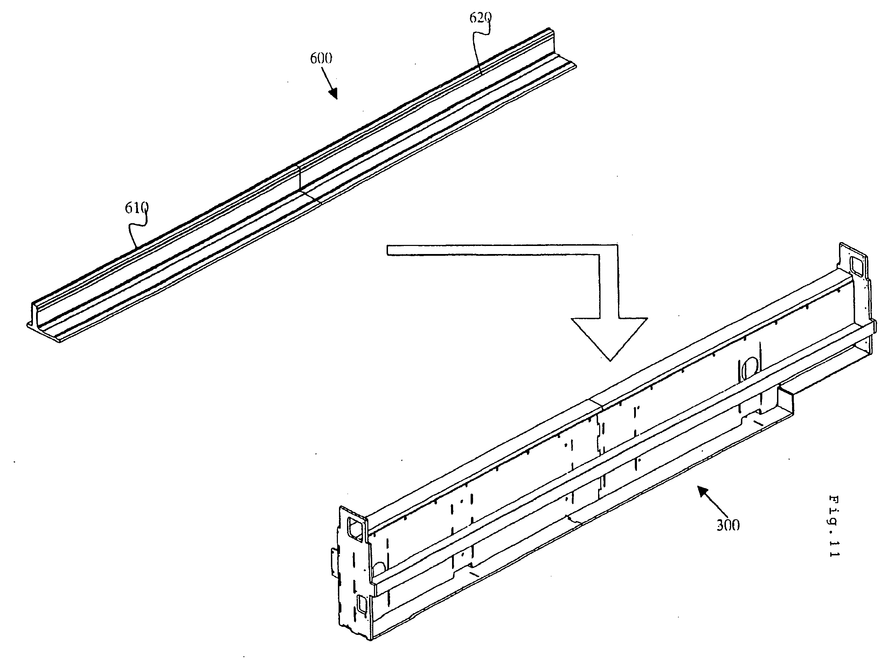

FIG. 11 shows an assembly structure of the bed lower unit 300 and the bed upper portion 600 and an assembling procedure to complete the bed unit by assembling upper can machining members 610, 620 after completion of the bed lower unit 300.

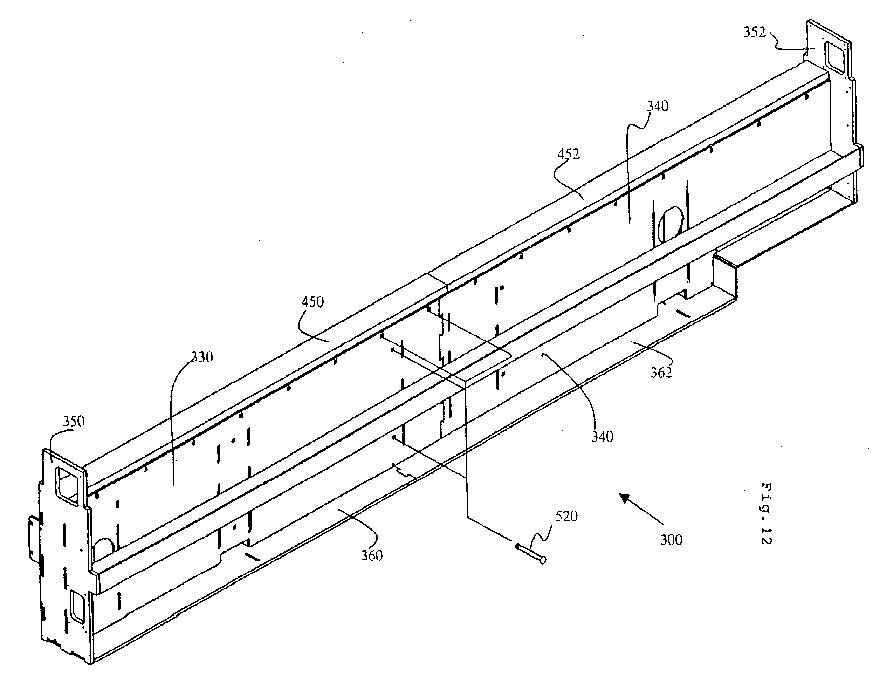

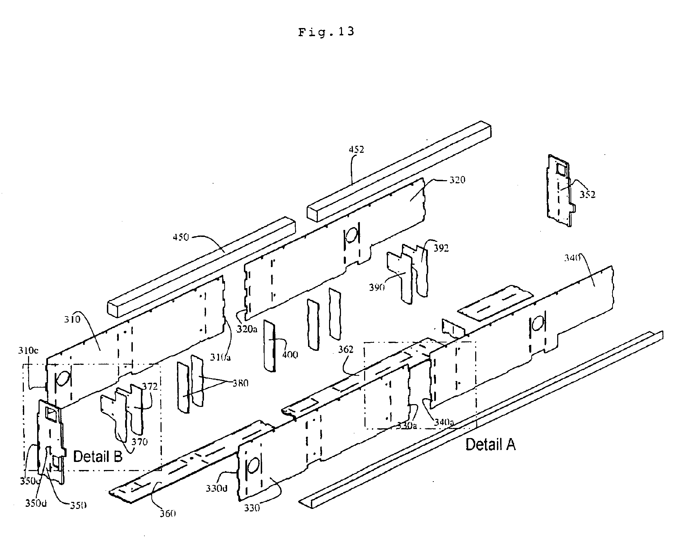

FIG. 12 is an assembled view of the bed lower unit 300, and FIG. 13 is an exploded view.

The bed lower unit 300 has four side plates 310, 320, 330, 340 and bottom plates 360, 362 and is provided with ribs 370, 372, 380, 390, 392, 400 and so on having various shapes for connecting these side plates to the bottom plates.

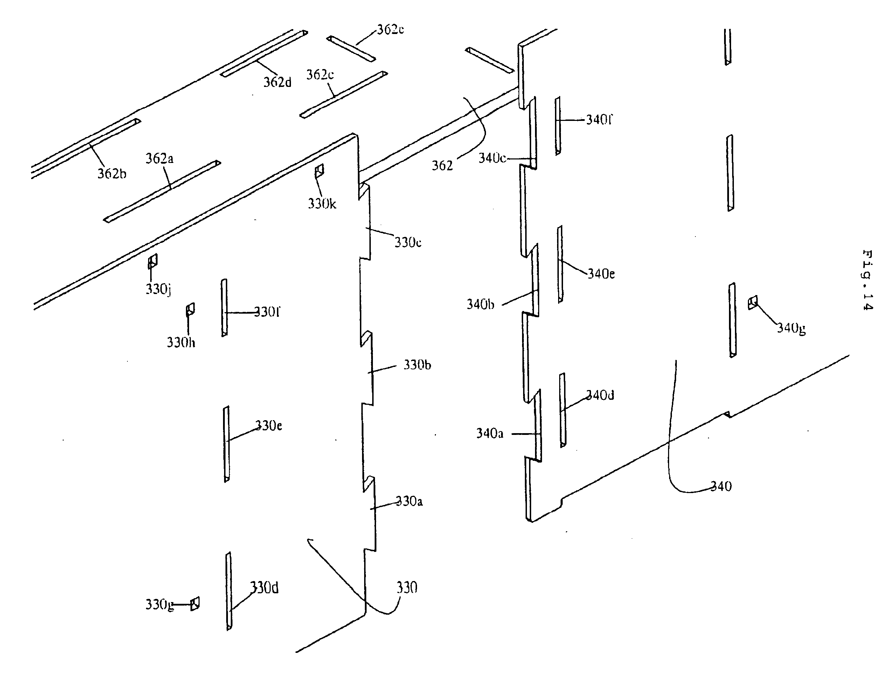

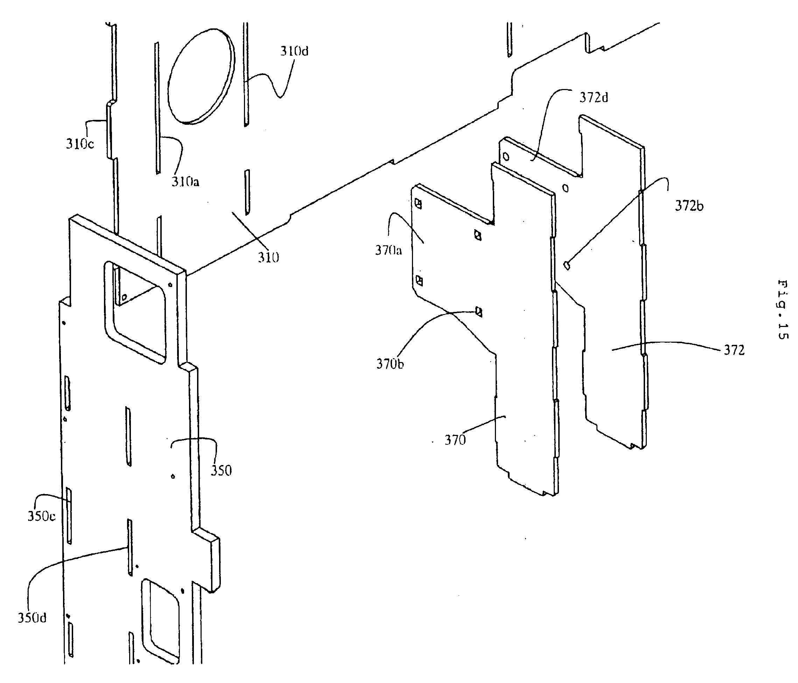

FIG. 14 shows a detail of A part of FIG. 13, and FIG. 15 shows a detail of B part.

The two side plates 310 and 320 are constituted into a single side plate unit by combining a joint structure using a dovetail tenon 310a formed at each of the ends and a dovetail tenon groove 320a.

Since the side plate unit is assembled and constituted by two side plates, there is no need to use a large-sized laser machine for machining of each side plate and productivity and machining accuracy are improved.

Similarly, the side plate 330 and the side plate 340 are also constituted into a single side plate unit by combining a dovetail tenon 330a and a dovetail tenon groove 340a.

FIG. 14 shows a joint structure of the side plate 330 and the side plate 340.

Three dovetail tenons 330a, 330b, 330c are provided at an end of the side plate 330. On the other hand, three dovetail tenon grooves 340a, 340b, 340c are formed at an end of the side plate 340.

By combining these three dovetail tenons with the dovetail tenon grooves, the two side plates are assembled into a single side plate unit.

The side plate unit 330 has slits 330d, 330e, 330f and so on to which the projection portions of the rib are inserted and the side plate unit 330 is provided with square holes 330g, 330h, 330j, 330k and so on for attaching a fastening unit, which will be described later.

Similarly, the side plate 340 is also provided with slits 340d, 340e, 340f and so on to which the projection portions of the rib are inserted and a square hole 340g and so on for attaching the fastening unit.

The bottom plate 362 also has slits 362a, 362b, 362c, 362d to which the projection portions formed at a lower part of the side plate are inserted and a slit 362e to which the projection portion of the rib is inserted.

As shown in FIG. 15, a plurality of projection portions are provided at the end of the side plate 310, and a projection portion 310c is inserted into a corresponding slit 350c of an end side plate 350. Into a slit 350d formed on the end side plate 350, a projection portion 330d at the end of the side plate 330 shown in FIG. 13 is inserted. By combining the plurality of projection portions provided at the end of the side plate with the plurality of slits formed at the end side plate, a bed unit with high rigidity can be constituted.

A pair of ribs 370, 372 have flange portions 370a, 372d and pierce the slits 310a, 310d of the side plate 310 and project. These flange portions 370a, 372d are used for mounting a lateral beam connecting the right and left bed units.

One rib 370 has a square hole 370b for the fastening unit, while the other rib 372 has a circular hole 372b for bolt piercing.

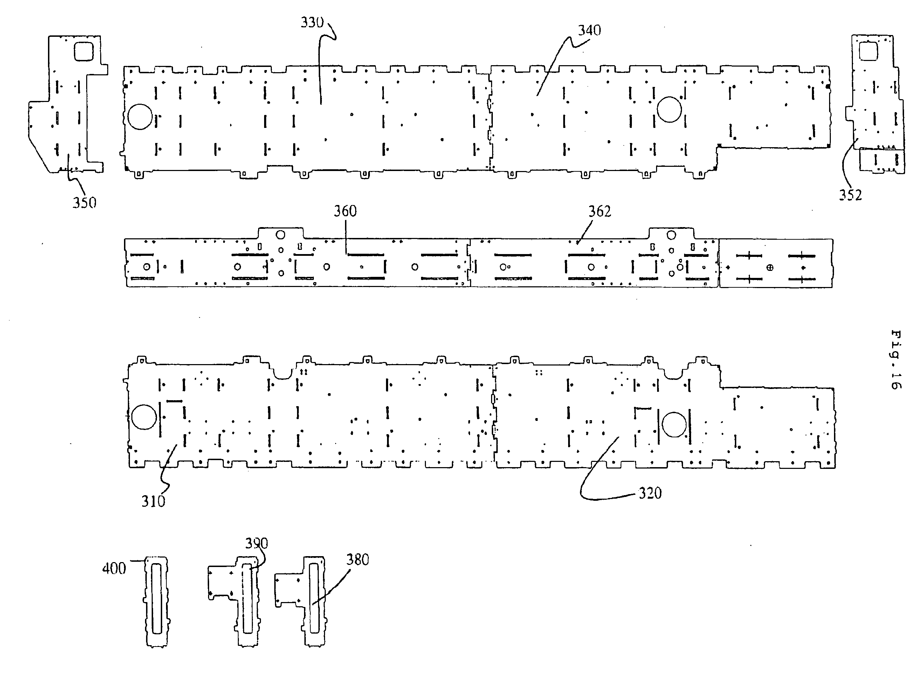

FIG. 16 shows a list of laser machined members of the members constituting the bed lower unit.

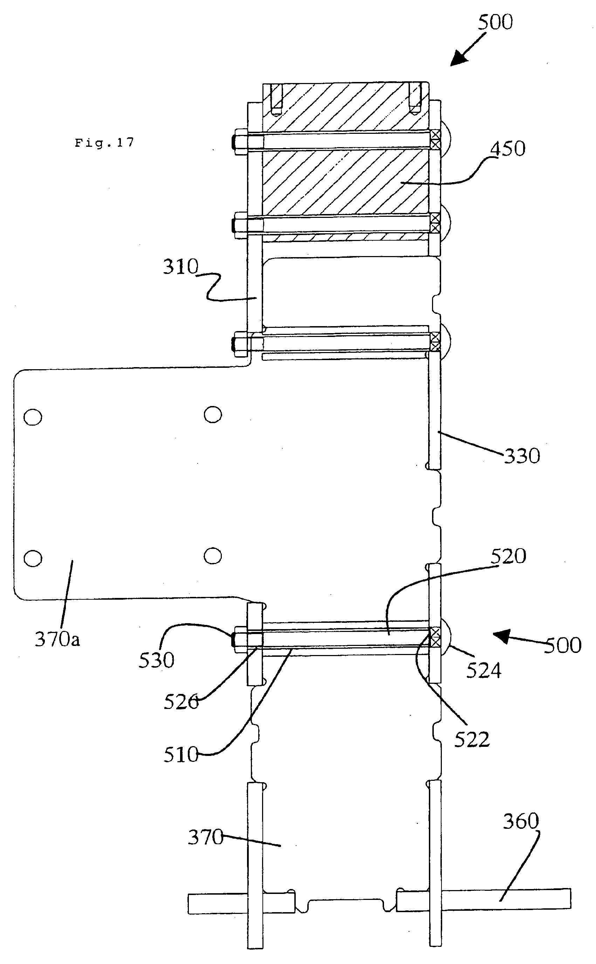

FIG. 17 shows a sectional structure of the bed. The opposing side plates 310, 330 are joined by the rib 370 and fastened by a fastening unit 500. The fastening unit 500 is constituted by a pipe 510, a bolt 520 inserted into the pipe 510 and a nut 530.

The pipe 510 is pressed into contact with inner wall portions of the two side plates 310, 330. The bolt 520 has a round head portion 524, a square column portion 522 formed at a seated portion immediately below the round head portion 524 and a screw portion 526.

By inserting this bolt 520 into a square hole formed on one side plate 330, the bolt 520 is locked. Then, by screwing the nut 530 with the screw portion 526 of the bolt projecting outside of the other side plate 310, the two side plates 310, 330 can be firmly assembled in cooperation with the pipe 510.

Moreover, a rectangular column shaped member 450 is disposed at upper parts of the opposing side plates 310, 330 and joined by the fastening unit 500.

A plurality of ribs are disposed inside the two side plates 310, 330. Moreover, a projection portion provided at a lower end of the side plate is inserted into a slit of a base plate.

By the above-mentioned construction, a bed unit with high rigidity can be manufactured.

The mechanism for improving the rigidity has highly accurate projection portions (tenons) and slits (mortices) machined with a dimensional accuracy of about 0.05 to 0.1 mm by laser machining and constitutes a highly rigid integral structure by fastening a large number of highly accurate constituent members machined with a dimensional accuracy of about 0.05 to 0.01 mm by a laser machine with a large number of projection portions and slits arranged at random as well as a large number of fastening bolts or the like so as to offset dimensional tolerance and to integrally assemble those elements.

## Claims

1. A bed (50A), of a machine tool (1) having an assembly structure of a sheet metal member made by the laser precision machining, comprising:
an upper unit (600) and a lower unit (300) of the bed (50A),
the lower unit (300) of the bed (50A) being provided with side plates (310, 320, 330, 340) extending in the longitudinal direction of the bed (50A) and oppositely arranged, a bottom plate (360, 362) covering a bottom portion of the side plates, a rectangular column member (450) arranged on an upper part of the side plates (310, 320, 330, 340), end face plates (350, 352) covering both ends of the side plates,
a plurality of ribs (370, 372, 380, 390, 392, 400) arranged inside and joined to the side plates (310, 320, 330, 340), and a fastening unit (500) for fastening both the side plates;
and wherein the side plate (310, 320, 330, 340) has a structure joining a plurality of sheet metal members, and
a joint structure for joining the sheet metal members is dovetail tenons (310a, 330a-c) provided at an end of one member and dovetail tenon grooves (320a, 340a-c) formed at the end of the other member and to which the dovetail tenons are inserted.

2. The bed (50A) of a machine tool according to claim 1, wherein the joining structure between the rib (370,372,380,390,382,400) and the side plate (310,320,330,340) is projection portions (310c,330d) provided at an outer edge portion of the rib (370,372,380,390,400) and slit (330d-f, 340d-f, 350c-d) formed on the side plate (310,320,330,340,350) and to which the projection portions are inserted.

3. The bed (50A) of a machine tool according to claim 1, wherein the fastening unit (500) is provided with a pipe (510) in contact with inner surfaces of both side plates (310,320;330,340), a bolt (520) piercing both sides and the pipe (510) and a nut to be screwed with the bolt (520).

## Patentansprüche

1. Bett (50A) einer Werkzeugmaschine (1), das eine Zusammenbaustruktur eines Metallblattelements aufweist, das durch Präzisions-Laserbearbeiten hergestellt ist, mit:
einer oberen Einheit (600) und einer unteren Einheit (300) des Betts (50A),
wobei die untere Einheit (300) des Betts (50A) mit Seitenplatten (310, 320, 330, 340) bereitgestellt ist, die sich in der Längsrichtung des Betts (50A) erstrecken und gegenüberliegend angeordnet sind, mit einer Bodenplatte (360, 362), die einen Bodenabschnitt der Seitenplatten bedeckt, mit einem rechteckigen Säulenelement (450), das an einem oberen Teil der Seitenplatten (310, 320, 330, 340) angeordnet ist, mit Endflächenplatten (350, 352), die beide Enden der Seitenplatten bedecken,
einer Mehrzahl Rippen (370, 372, 380, 390, 392, 400), die innerhalb angeordnet und mit den Seitenplatten (310, 320, 330, 340) gefügt sind, und einer Befestigungseinheit (500) zum Befestigen beider Seitenplatten;
und wobei die Seitenplatte (310, 320, 330, 340) eine Struktur aufweist, die eine Mehrzahl Metallblattelemente fügt, und
eine Fügestruktur zum Fügen der Metallblattelemente ein Schwalbenschwanzzapfen (310a, 330a-c), der an einem Ende eines Elements bereitgestellt ist, und Schwalbenschwanzzapfennuten (320a, 340a-c), die an dem Ende des anderen Elements ausgebildet sind, und in die die Schwalbenschwanzzapfen eingefügt werden, ist.

2. Bett (50A) einer Werkzeugmaschine nach Anspruch 1, wobei die Fügestruktur zwischen der Rippe (370, 372, 380, 390, 382, 400) und der Seitenplatte (310, 320, 330, 340) vorspringende Abschnitte (310c, 330d), die an einem äußeren Kantenabschnitt der Rippe (370, 372, 380, 390, 400) und ein Schlitz (330d-f, 340d-f, 350c-d), der an der Seitenplatte (310, 320, 330, 340, 350) ausgebildet ist, und an den die vorspringenden Abschnitte eingefügt sind, ist.

3. Bett (50A) einer Werkzeugmaschine nach Anspruch 1, wobei die Befestigungseinheit (500) mit einem Rohr (510) in Berührung mit inneren Oberflächen beider Seitenplatten (310, 320; 330, 340), einer durch beide Seiten und das Rohr (510) durchdringende Schraube (520) und eine mit der Schraube (520) zu verschraubende Mutter ist.

## Revendications

1. Banc (50A) d'une machine-outil (1) ayant une structure d'assemblage d'un élément métallique en feuille réalisé par l'usinage de précision au laser, comprenant :
une unité supérieure (600) et une unité inférieure (300) du banc (50A),
l'unité inférieure (300) du banc (50A) étant prévue avec des plaques latérales (310, 320, 330, 340) s'étendant dans la direction longitudinale du banc (50A) et agencées à l'opposé, une plaque inférieure (360, 362) recouvrant une partie inférieure des plaques latérales, un élément de colonne rectangulaire (450) agencé sur une partie supérieure des plaques latérales (310, 320, 330, 340), des plaques de face d'extrémité (350, 352) recouvrant les deux extrémités des plaques latérales,
une pluralité de nervures (370, 372, 380, 390, 392, 400) agencées à l'intérieur et assemblées aux plaques latérales (310, 320, 330, 340) et une unité de fixation (500) pour fixer les deux plaques latérales ;
et dans lequel la plaque latérale (310, 320, 330, 340) a une structure assemblant une pluralité d'éléments de métal en feuille, et
une structure de joint pour assembler les éléments de métal en feuille est des tenons à queue d'aronde (310a, 330a-c) prévus au niveau d'une extrémité d'un élément et des rainures de tenon à queue d'aronde (320a, 340a-c) formées à l'extrémité de l'autre élément et dans laquelle les tenons à queue d'aronde sont insérés.

2. Banc (50A) d'une machine-outil selon la revendication 1, dans lequel la structure d'assemblage entre la nervure (370, 372, 380, 390, 382, 400) et la plaque latérale (310, 320, 330, 340) est des parties de saillie (310c, 330d) prévues au niveau d'une partie de bord externe de la nervure (370, 372, 380, 390, 400) et une fente (330d-f, 340d-f, 350c-d) formée sur la plaque latérale (310, 320, 330, 340, 350) et dans laquelle les parties de saillie sont insérées.

3. Banc (50A) d'une machine-outil selon la revendication 1, dans lequel l'unité de fixation (500) est prévue avec un tuyau (510) en contact avec les surfaces internes des deux plaques latérales (310, 320, 330, 340), un boulon (520) perçant les deux côtés et le tuyau (510) et un écrou à visser avec le boulon (520).
